# EUROPEAN PATENT APPLICATION

(11) **EP 4 527 746 A1**
(43) Date of publication of application: **26.03.2025**
(21) Application number: 23199463.3
(22) Date of filing: 25.09.2023
(51) Int. Cl.: B64F 5/60, F15B 19/00, G01M 3/28

(54) **METHOD AND DEVICES FOR TESTING AN AIRCRAFT'S HYDRAULIC SYSTEM**

(71) Applicant: Airbus Operations GmbH, 21129 Hamburg (DE)
(72) Inventor: Kaufmann, Alena, 21129 Hamburg (DE); Klose, Julian, 21129 Hamburg (DE); Hamm, Martin, 21129 Hamburg (DE)
(74) Representative: KASTEL Patentanwälte PartG mbB

(57) **Abstract**

In order to reduce time and effort during maintenance, the invention proposes a method for automatically testing a hydraulic system (12) of an aircraft (10) during ground service, wherein the hydraulic system (12) includes, onboard of the aircraft (10), a hydraulic pump (14), a hydraulic reservoir (16), a hydraulic conduct system (18), a hydraulically driven unit (20), and a control and monitoring unit (22), the method comprising:
a) pressurizing the hydraulic system (12) by means of the hydraulic pump (14),
b) monitoring at least one parameter indicative of an external leakage of the hydraulic system (12) during the pressurisation of the hydraulic system (12),
c) determining whether an external leakage of the hydraulic system (12) exists on basis of the at least one parameter.

## Description

The invention relates to a method for automatically testing a hydraulic system of an aircraft during ground service. Further, the invention relates to devices and computer programs for conducting such method.

For technical background, reference is made to the following literature:
[1] Hydraulic Ground Power Unit - Mainline Aircraft - 3000psi and 5000psi, company brochure of Test-Fuchs GmbH, downloaded from internet under www.test-fuchs.com on 29-08-2023

Today's ground maintenance concepts for hydraulic systems of aircraft rely on the usage of ground support equipment available at airfields, like hydraulic ground carts, an example thereof is disclosed in [1], Procurement, logistics and usage of these ground carts are significant for airfield operators. If the ground cart is not available at the aircraft's location, delays will be the result. Maintenance personnel need to operate the ground cart and intervene during certain maintenance procedures.

An objective of the invention is to reduce time and costs for a certain maintenance procedure during ground service.

For achieving such objective, the invention provides a method according to claim 1. A control and monitoring unit, a hydraulic system, an aircraft and a computer program for carrying out the method are subject-matters of the further independent claims.

Advantageous embodiments are subject-matters of the dependent claims.

The invention provides according to a first aspect thereof a method for automatically testing a hydraulic system of an aircraft during ground service, wherein the hydraulic system includes, onboard of the aircraft, a hydraulic pump, a hydraulic reservoir, a hydraulic conduct system, a hydraulically driven unit, and a control and monitoring unit, the method comprising:
a) pressurizing the hydraulic system by means of the hydraulic motor-pump unit,
b) monitoring at least one parameter indicative of an external leakage of the hydraulic system during the pressurisation of the hydraulic system,
c) determining whether an external leakage of the hydraulic system exists on basis of the at least one parameter.

Preferably, before step a), the following step is conducted:
aa) manually triggering the test routing comprising steps a) to c).

Preferably, before step a), the following step is conducted:
bb) automatically checking whether conditions for pressurisation of the hydraulic system are met.

Preferably, step bb) comprises:
bb1) checking whether the aircraft is on ground.

Preferably, step bb) comprises:
bb2) checking whether a temperature is within predefined limits.

Preferably, step a) comprises:
a1) pressurizing the hydraulic system up to a predefined level.

Preferably, step a) comprises:
a2) commanding the pump to pressurize the system by means of the controlling and monitoring unit.

Preferably, step a) comprises:
a3) keeping the hydraulic system pressurized by controlling the pump in order to compensate for internal leakage only.

Preferably, step a) comprises:
a4) switching the pump off when the hydraulic system is pressurized.

Preferably, step a) comprises:
a5) keeping the hydraulic system pressurized by controlling the pump in order to maintain the pressure in the hydraulic system.

Preferably, the parameter to be monitored in step b) is chosen from the group of parameters consisting of the pressure in the hydraulic system, the output power of the pump, and the fluid level in the reservoir.

According to a preferred embodiment of the method comprising step a3), an external leakage is determined when
- a decrease of the pressure in the hydraulic system over the time is detected or
- a decrease of the reservoir level over time is detected.

According to a preferred embodiment of the method comprising step a4), an external leakage is determined when
- a decrease of the pressure in the hydraulic system over the time is detected which is different to, namely quicker than, a pressure decrease due to internal leakage or
- a decrease of the reservoir level over time is detected.

According to a preferred embodiment of the method comprising step a5), an external leakage is determined when the output power of the pump increases.

Preferably, the hydraulic system comprises an isolation means configured to isolate several portions of the hydraulic system from each other, wherein the method further comprises the step:
d) in case that an external leakage is determined in step c), localizing the external leakage by isolating parts of the hydraulic system with the isolation means and conducting steps a) to c) for one, several or all of the isolated parts in order to determine in which of the parts the external leakage arises.

Preferably, step d) comprises the step:
d1) isolating the hydraulic system in a first part upstream of the isolation means and a second part downstream of the isolation means.

Preferably, step d) comprises the step:
d2) conducting steps a) to c) for the first part, and localizing the external leakage
d2a) downstream of the isolation means in case that the external leakage is no longer detected,
d2b) upstream of the isolation means in case that the external leakage is still detected, and
d2c) such that a first external leakage is upstream and a second external leakage is downstream of the isolation means in case that the external leakage is detected to a reduced scale.

Preferably, the second part of the hydraulic system is kept isolated in case of d2a) or d2c) in order to prevent system loss caused by external leakage.

Preferably, a further isolation means is used to further refine the localisation.

According to preferred embodiments of the invention, an external leakage detection, preferably with localisation, further preferred also with isolation, is conducted in flight, e.g. with devices and steps as described in one or several of the aforementioned embodiments.

Hence, according to another aspect, the invention provides a method for automatically testing a hydraulic system of an aircraft, wherein the hydraulic system includes, onboard of the aircraft, a hydraulic pump, a hydraulic reservoir, a hydraulic conduct system, a hydraulically driven unit, and a control and monitoring unit, the method comprising:
conducting the method according to any of the aforementioned embodiments for testing during ground service and conducting the following steps for testing in flight:
6b) monitoring the at least one parameter indicative of an external leakage of the hydraulic system, and
6c) determining whether an external leakage of the hydraulic system exists on basis of the at least one parameter.

Preferably, the method further comprises a leakage localisation of an external leakage detected in flight, when the hydraulic system comprises an isolation means configured to isolate several portions of the hydraulic system from each other. According to preferred embodiments, the method for testing in flight further comprises the step:
6d) in case that an external leakage is determined in step 6c), localizing the external leakage by isolating parts of the hydraulic system with the isolation means and conducting steps 6b) and 6c) for one, several or all of the isolated parts in order to determine in which of the parts the external leakage arises.

Preferably, step 6d) comprises the step:
6d1) isolating the hydraulic system in a first part upstream of the isolation means and a second part downstream of the isolation means.

Preferably, step 6d) comprises the step:
6d2) conducting steps 6b) and 6c) for the first part, and localizing the external leakage
6d2a) downstream of the isolation means in case that the external leakage is no longer detected,
6d2b) upstream of the isolation means in case that the external leakage is still detected, and
6d2c) such that a first external leakage is upstream and a second external leakage is downstream of the isolation means in case that the external leakage is detected to a reduced scale.

Preferably, the second part of the hydraulic system is kept isolated in case of 6d2a) or 6d2c) in order to prevent system loss caused by external leakage.

Preferably, a further isolation means is used to further refine the localisation during flight.

According to another aspect, the invention provides a control and monitoring unit for a hydraulic system of an aircraft, configured to control and monitor the hydraulic system in order to conduct the method according to any of the preceding embodiments. Preferably, the control and monitoring unit comprises a processor and a memory containing a computer program with instructions to carry out the method.

According to another aspect, the invention provides a hydraulic system for an aircraft, comprising a pump, a hydraulic reservoir, a hydraulic conduct system, a hydraulically driven unit, at least one sensor for a parameter of the hydraulic system indicating an external leakage and a control and monitoring unit, wherein the control and monitoring unit is configured to control the hydraulic system to execute the method according to any of the aforementioned embodiments.

Preferably, the hydraulic pump is a part of a hydraulic motor-pump unit. Especially, the pump is a part of an electrically driven hydraulic motor-pump unit, especially a power pack.

Preferably, the hydraulic conduct system comprises several distribution lines.

Preferably, the hydraulic system further comprises at least one, preferably several isolation means configured to isolate parts of the hydraulic system from each other. Preferably, the isolation means comprise a valve controlled by the control and monitoring unit.

Preferably, at least one sensor is chosen from the group consisting of a pressure sensor for sensing a pressure in the hydraulic system, a sensor for determining a level of hydraulic fluid in the reservoir, and an output power sensor for determining a power output of the pump. Preferably, the output power sensor is configured to determine an electrical power needed by an electric motor-pump unit.

Preferably, the control and monitoring unit further is configured to monitor the parameter during flight in order to determine an external leakage of the hydraulic system.

Preferably, the control and monitoring unit is further configured to cause the hydraulic system to conduct one, several or all of the steps d), d1) and d2) in flight. Preferably, the control and monitoring unit is further configured to cause, in flight, the hydraulic system to keep the second part of the hydraulic system isolated in case of d2a) or d2c) in order to prevent system loss caused by external leakage.

Preferably, also during the external localisation conducted during flight, a further isolation means is used to further refine the localisation. Preferably, the control and monitoring unit is configured to control a further isolation means to further refine the localisation.

According to another aspect, the invention provides an aircraft comprising a hydraulic system according to one of the aforementioned embodiments and/or a control and monitoring unit according to one of the aforementioned embodiments.

According to another aspect, the invention provides a computer program comprising instructions to cause the hydraulic system of one of the aforementioned embodiments to execute the steps of the method according to any of aforementioned embodiments.

Preferred embodiments of the invention provide method and devices for external leakage detection and localisation with hydraulic power packs.

With regard to hydraulic systems, a leakage is internal when fluid leakage occurs within the system. External leakage is a leakage of hydraulic fluid from the hydraulic system to the exterior. External leakage can occur, e.g., due to hose bursts and loose hose fittings. In some embodiments, an A/C hydraulic system mainly has internal leakage due to the functionality of servocontrols. Servocontrols are used in standard actuators, e.g. in flight control actuation. They require a minimum internal flow for operation. This internal flow is considered internal leakage (from HP to LP). The wear of servovalves lead to increase in this internal leakage but even new servovalves do have internal leakage.

In some embodiments of the invention substitute hydraulic ground support equipment on airfields. This is done via enhanced functionality of the aircraft hydraulic system, with the already installed hardware. In some embodiments, hydraulic system, equipment, software including monitoring and control and/or maintenance strategies are therefore designed and/or adjusted to perform on ground maintenance.

Some embodiments of the invention enable to control a hydraulic motor-pump unit (e.g. of a power pack) similarly to a ground cart, but from the aircraft. The operation goes beyond current functionalities, applying pre-defined setting for scheduled maintenance and also allowing a fully independent control. This is advantageous for every operator, especially on small stations (such as small airfields) with less ground service equipment available.

Currently, external leakage tests of aircraft hydraulic systems are performed completely manually. For example, using a hydraulic ground power unit cart such as disclosed in [1], the hydraulic ground power unit is connected via hydraulic ports to the aircraft hydraulic system, and the hydraulic system is pressurized and the reservoir fluid level is checked or only visually inspected. If this level decreases over time, a leakage can be expected. If this is the case, the maintenance personnel has to perform a visual inspection of the whole hydraulic system in order to localize the leakage.

With the method and devices of the invention, an external leakage test is performed with the on-aircraft means, most preferably without need for a visual inspection.

By introducing this ground cart functionality into the on-board hydraulic system at least one, several or all of the following advantages can be achieved in preferred embodiments of the invention:
- Significant cost reduction for the airfield maintenance operator - e.g., less personnel, procurement, logistics.
- More flexibility on ground maintenance. E.g., there is no need to keep ground carts available and/or the maintenance can be performed in outstation.
- No common failure on different aircraft due to a contaminated ground cart.
- More flexibility for use of hydraulic fluids, especially new hydraulic fluids. The fluid is dedicated to the aircraft only and not to common maintenance points such as a ground cart.
- Increase of safety. E.g., one takes advantage of all control and monitoring means installed on aircraft, e.g. automatic stop of pressurisation if an external leak is detected.
- Reduction of probability of incorrect testing (due to autonomous maintenance procedures).
- More flexibility in case of new maintenance procedures. For example, the usage of hydraulic pumps allows all functionalities from the operational cycle of the aircraft.
- No weight increase in aircraft.

Embodiments of the invention are explained below referring to the accompanying drawings in which:
- Fig. 1: a side view of an aircraft during ground service;
- Fig. 2: a schematical, simplified block diagram of a hydraulic system of the aircraft;
- Fig. 3: a flow diagram of an embodiment of a method for testing the hydraulic system; and
- Fig. 4: a flow diagram of further steps of the method.

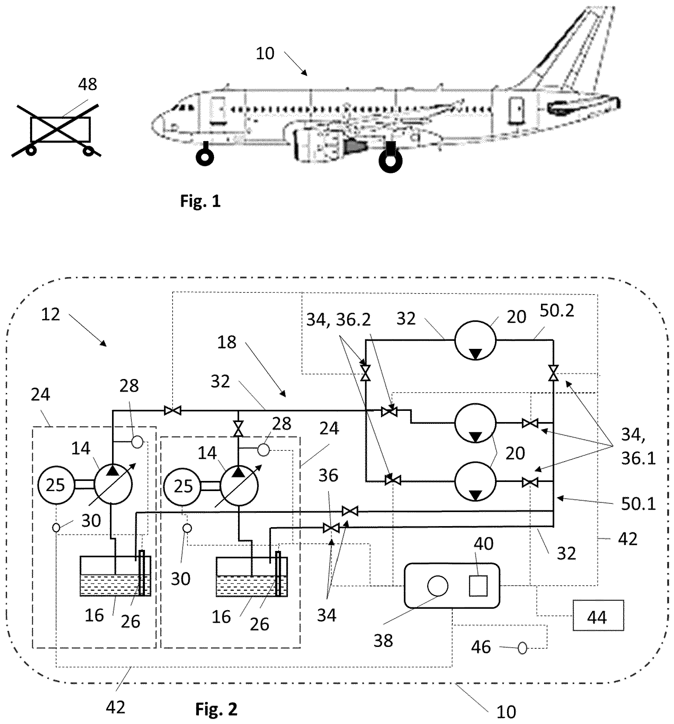

Fig. 1 and 2 show an embodiment of the aircraft 10 having a hydraulic system 12. The hydraulic system 12 comprises, onboard of the aircraft 10, a hydraulic pump 14, a hydraulic reservoir 16, a hydraulic conduct system 18, a hydraulically driven unit 20, and a control and monitoring unit 22.

In some embodiments, the hydraulic system 12 comprises one or several hydraulic (electric) power packs (HPP) 24 which comprise the pump 14, an (electric) motor 25 for driving the pump 14, the reservoir 16, and several sensors including a fluid level sensor 26 for detecting the reservoir fluid level, a pressure sensor 28 for detecting a pressure in the hydraulic system 12, and a power sensor 30 for detecting an output power of the pump 14, e.g., by detecting the electric power needed to drive the pump 14.

The hydraulic conduct system 18 includes several hydraulic lines 32, especially hydraulic distribution lines, and isolation means 34 such as valves 36 for isolating parts of the hydraulic system 12 from each other.

The control and monitoring unit 22 may be implemented in one component or as a control and monitoring system comprising several components. The control and monitoring unit 22 comprises a processor 38 and a memory 40 containing a computer program with instructions that cause the hydraulic system 12 to perform the methods as mentioned below.

The control and monitoring unit 22 is configured to control and monitor the hydraulic system 12. In some embodiments, the control and monitoring unit 22 is connected to the HePP 24 and the isolation means 34 by communication lines 42. Further, the control and monitoring unit 22 is connected to an aircraft control unit 44 which includes a user interface and several means for detecting a status of the aircraft 10 and environmental parameters such as a temperature. For example, a temperature sensor 46 is shown in Fig. 2.

During ground service, as shown in Fig. 1, an external leakage test can be performed with the on-aircraft means 12, 22 without the need of a ground cart 48. In other words, the ground cart functionality "external leakage test" is introduced into the onboard hydraulic system 12.

The method for automatically testing the hydraulic system comprises:
a) pressurizing the hydraulic system by means of the hydraulic pump,
b) monitoring at least one parameter indicative of an external leakage of the hydraulic system during the pressurisation of the hydraulic system,
c) determining whether an external leakage of the hydraulic system exists on basis of the at least one parameter.

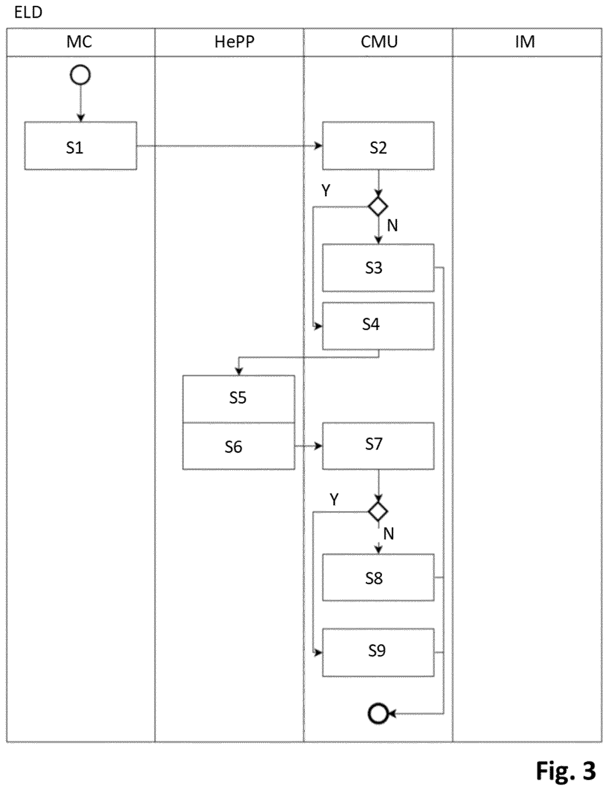

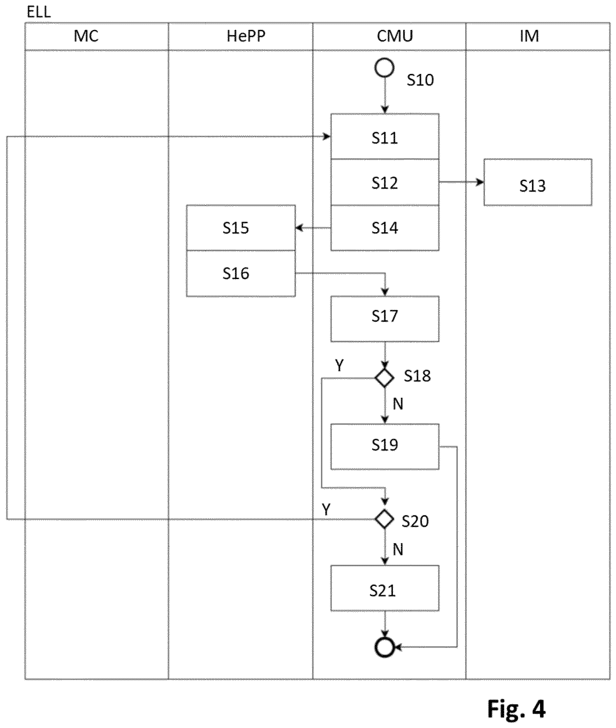

Fig. 3 shows a flow diagram for a preferred embodiment of the method for testing the hydraulic system 12 implementing an external leakage test. As an optional feature, an external leakage also can be localised with the on-aircraft means 12, 22. Fig. 4 shows a flow diagram for a preferred embodiment of this optional leakage localisation.

The reference signs used in Fig. 3 and 4 mean the following:
- ELD: external leakage detection
- MC: Maintenance crew
- HePP: hydraulic electric power pack
- CMU: control and monitoring unit
- IM: isolation means
- Y: yes
- N: no
- S1: trigger leakage detection
- S2: check if test conditions are met
- S3: indicate test failure
- S4: command pressurisation
- S5: pressurise hydraulic system
- S6: send sensor data (pressure, reservoir, level, power)
- S7: monitor reservoir level, system pressure & power
- S8: indicate test finalisation without finding
- S9: indicate external leakage
- ELL: external leakage localisation
- S10: start: leakage detected
- S11: start localisation
- S12: command isolation
- S13: isolate hydraulic line
- S14: command pressurisation
- S15: pressurise hydraulic system
- S16: send sensor data (pressure, reservoir, level, power)
- S17: monitor reservoir level, system pressure & power
- S18: leakage?
- S19: indicate isolation downstream of isolation means
- S20: other isolation means available?
- S21: indicate localisation upstream of isolation means

Referring to Fig. 2 and 3, an external leakage test is realised with the means installed on the aircraft 10, especially with a hydraulic motor-pump unit such as the HePP 24 and the control and monitoring unit 22. In some embodiments, the test can be performed automatically, with the following chronology:
S1 The maintenance personnel MC triggers the test, when it is needed.
S2 The control and monitoring unit CMU, 22 then checks if all conditions - e.g., aircraft 10 on ground, temperature within limitations, etc. - for a pressurisation of the hydraulic system are met. If this is the case (Y), the next step S4 follows; otherwise, a test failure is indicated in step S3.
S4, S5 The hydraulic system 12 is pressurised up to a defined value and
   a. kept pressurised by controlling the pumps 14 in order to compensate for internal leakage only or
   b. then the pumps 14 are switched off or
   c. kept pressurised by controlling the pumps 14 in order to maintain the pressure.
S6, S7 The hydraulic system pressure, the reservoir level and the HePP output power, which are monitored by the on-aircraft control and monitoring unit 22, are indicators for external leakage or in other words parameters indicating an external leakage. Depending on the realisation of steps S4, S5 (alternatives a., b., or c. as mentioned above) the behaviour of the hydraulic system 12 is monitored.
   a. If the pressure decreases over time, different to the decrease resulting from internal leakage, or if the reservoir level decreases over time, an external leakage can be expected.
   b. If the pressure decreases, differently to the decrease resulting from internal leakage - i.e., quicker -, or if the reservoir level decreases over time, an external leakage can be expected.
   c. If the output power of the HePP 24 increases, a higher flow demand is expected to be the root-cause. This indicates an external leakage.
S8, S9 When the test is finished, the result is provided to the maintenance personnel MC.

In some embodiments, an enhanced functionality extending the method for testing external leakage ELD is a leakage localisation ELL. A preferred embodiment thereof is shown in Fig. 4. This functionality replaces the visual inspection of the hydraulic system 12 after the detection of an external leakage. For the realisation of the leakage localisation isolation means 34, IM need to be installed in the aircraft hydraulic system 12. Note that the leakage localisation may make use of existing isolation means 34 such as valves 36. In some embodiments, new isolation means 34 are introduced into the hydraulic system 12 in order to provide this functionality.

Referring to Figs. 2 and 4, a preferred embodiment of the procedure for the external leakage localisation ELL is as follows:
S10, S11 If an external leakage is detected, the localisation function is started.
S12, S13 The isolation means 34 is controlled in order to isolate the downstream distribution line. In some embodiments where several isolation means 34 are available, the localisation test is started with the isolation means that is most far away in the downstream direction from the HePP 24, such as the valve 36.1 in Fig. 2. Thus, a downstream part 50.1 of the hydraulic system 12 is isolated from an upstream part 50.2 of the hydraulic system 12.
S14, S15 The hydraulic system 12 is pressurized. In some embodiments, this is conducted similar to steps S4, S5 of the procedure of the external leakage detection ELD as described above and shown in Fig. 3, with the different options a., b., and c. of realisation.
S16, S17 The reservoir level, the hydraulic system pressure and the HePP output power are monitored for external leakage indications. In some embodiments, this is conducted similar to steps S6, S7 of the procedure of the external leakage detection ELD as described above and shown in Fig. 3, with the different options a., b., and c. of realisation.
S18 several results of the leakage detections are possible
   i., S19 If the external leakage is no longer detected, it is expected that is localised downstream of the isolation, i.e. in the downstream part 50.1 of the hydraulic system 12. This information is provided to the maintenance crew MC. The distribution line - downstream part 50.1 - is kept isolated in order to prevent system loss caused by the external leakage.
   ii., S20, S21 If the external leakage is still detected it is expected that it is localised upstream of the isolation means - i.e., in the upstream part 50.2 of the hydraulic system 12. As indicated by step S20, another isolation means 34 may be controlled in order to further refine the localisation (starting again with S11). In the example of Fig. 2, the next valve 36.2 in the upstream direction may be closed in order to isolate two parts of the former upstream part 50.2 of the hydraulic system 12 from each other, and the procedure is repeated.
   iii., S19, S20, S21 In case that the detection for leakage in steps S16, S17, and S18 leads to the result that the external leakage is reduced but still detected, two (or more) external leakages are expected. One is assumed downstream of the isolation means 34 - i.e. in the downstream part 50.1. This information is provided to the maintenance crew MC. The distribution line is kept isolated in order to prevent system loss caused by external leakage. The second external leakage is expected to be localised upstream of the isolation means - i.e., in the upstream part 50.2 of the hydraulic system 12. As indicated by step S20, another isolation means 34 may be controlled in order to further refine the localisation of this second external leakage (starting again with S11). In the example of Fig. 2, the next valve 36.2 in the upstream direction may be closed in order to isolate two parts of the former upstream part 50.2 of the hydraulic system 12 from each other, and the procedure is repeated.

In most preferred embodiments, additional to the on-ground functionalities, the reservoir level is indicating external leakage also during flight. If no heavy consumer operation is performed and the reservoir level is decreasing, an external leakage can be expected and indicated. In some embodiments, the control and monitoring unit 22 of the hydraulic system 12 and/or maybe also other systems or units such as e.g. flight controls are used to determine the status of each consumer such as the hydraulically driven unit 20. If no command is given, only internal leakage can be expected at the consumers. If then the RSVR level decreases rapidly, an external leakage is detected.

A localisation can also be conducted in flight by use of the isolation means IM, 34, 36, 36.1, 36.2, similarly as described above for the on ground service, wherein instead of the leakage detection for the ground condition the in-flight leakage detection as mentioned before is conducted.

All in all, the functionalities as described above save costs and time and reduce the probability during maintenance. On the aircraft side, the weight of the equipment or installation effort will not increase, as the detection function can be realised by means of software.

### Reference sign list:

- 10: aircraft
- 12: hydraulic system
- 14: pump
- 16: reservoir
- 18: hydraulic conduct system
- 20: hydraulically driven unit
- 22: control and monitoring unit
- 24: hydraulic electric power pack
- 25: motor
- 26: fluid level sensor
- 28: pressure sensor
- 30: power sensor
- 32: hydraulic line
- 34: isolation means
- 36, 36.1, 36.2: valve
- 38: processor
- 40: memory
- 42: communication line
- 44: aircraft control unit
- 46: temperature sensor
- 48: ground cart
- 50.1: downstream part
- 50.2: upstream part
- ELD: external leakage detection
- MC: Maintenance crew
- HePP: hydraulic electric power pack
- CMU: control and monitoring unit
- IM: isolation means
- Y: yes
- N: no
- S1: trigger leakage detection
- S2: check if test conditions are met
- S3: indicate test failure
- S4: command pressurisation
- S5: pressurise hydraulic system
- S6: send sensor data (pressure, reservoir, level, power)
- S7: monitor reservoir level, system pressure & power
- S8: indicate test finalisation without finding
- S9: indicate external leakage
- ELL: external leakage localisation
- S10: start: leakage detected
- S11: start localisation
- S12: command isolation
- S13: isolate hydraulic line
- S14: command pressurisation
- S15: pressurise hydraulic system
- S16: send sensor data (pressure, reservoir, level, power)
- S17: monitor reservoir level, system pressure & power
- S18: leakage?
- S19: indicate isolation downstream of isolation means
- S20: other isolation means available?
- S21: indicate localisation upstream of isolation means

## Claims

1. Method for automatically testing a hydraulic system (12) of an aircraft (10) during ground service, wherein the hydraulic system (12) includes, onboard of the aircraft (10), a hydraulic pump (14), a hydraulic reservoir (16), a hydraulic conduct system (18), a hydraulically driven unit (20), and a control and monitoring unit (22), the method comprising:
a) pressurizing the hydraulic system (12) by means of the hydraulic pump (14),
b) monitoring at least one parameter indicative of an external leakage of the hydraulic system (12) during the pressurisation of the hydraulic system (12),
c) determining whether an external leakage of the hydraulic system (12) exists on basis of the at least one parameter.

2. Method according to claim 1, wherein at least one or several of the following steps are conducted before step a):
aa) manually triggering the test routing comprising steps a) to c),
bb) automatically checking whether conditions for pressurisation of the hydraulic system are met, preferably such that step bb) comprises at least one or several of the steps:
bb1) checking whether the aircraft (10) is on ground,
bb2) checking whether a temperature is within predefined limits.

3. Method according to any of the preceding claims, wherein step a) comprises at least one or several of the steps:
a1) pressurizing the hydraulic system (12) up to a predefined level,
a2) commanding the pump (14) to pressurize the system (12) by means of the controlling and monitoring unit (22),
a3) keeping the hydraulic system (12) pressurized by controlling the pump (14) in order to compensate for internal leakage only,
a4) switching the pump (14) off when the hydraulic system (12) is pressurized,
a5) keeping the hydraulic system (12) pressurized by controlling the pump (14) in order to maintain the pressure in the hydraulic system (12).

4. Method according to any of the preceding claims, wherein the parameter to be monitored in step b) is chosen from the group of parameters consisting of the pressure in the hydraulic system (12), the output power of the pump (14), and the fluid level in the reservoir (16).

5. Method according to claim 3 and claim 4, wherein:
5.1 in case that step a3) is conducted, an external leakage is determined when
• a decrease of the pressure in the hydraulic system (12) over the time is detected or
• a decrease of the reservoir level over time is detected;
5.2 in case that step a4) is conducted, an external leakage is determined when
• a decrease of the pressure in the hydraulic system (12) over the time is detected which is different to, namely quicker than, a pressure decrease due to internal leakage or
• a decrease of the reservoir level over time is detected; or
5.3 in case that step a5) is conducted, an external leakage is determined when the output power of the pump (14) increases.

6. Method for automatically testing a hydraulic system (12) of an aircraft (10), wherein the hydraulic system (12) includes, onboard of the aircraft (10), a hydraulic pump (14), a hydraulic reservoir (16), a hydraulic conduct system (18), a hydraulically driven unit (20), and a control and monitoring unit (22), the method comprising:
conducting the method according to any of the preceding claims during ground service and conducting the following steps in flight:
6b) monitoring the at least one parameter indicative of an external leakage of the hydraulic system (12), and
6c) determining whether an external leakage of the hydraulic system (12) exists on basis of the at least one parameter.

7. Method according to any of the preceding claims, wherein the hydraulic system (12) comprises an isolation means (34) configured to isolate several portions (50.1, 50.2) of the hydraulic system (12) from each other, wherein the method further comprises the step:
d) in case that an external leakage is determined in step c) or 6c), localizing the external leakage by isolating parts (50.1, 50.2) of the hydraulic system (12) with the isolation means (34) and conducting steps a) to c), or 6b) and 6c), for one, several or all of the isolated parts (50.1, 50.2) in order to determine in which of the parts (50.1, 50.2) the external leakage arises.

8. Method according to claim 7, wherein step d) comprises the following steps:
d1) isolating the hydraulic system (12) in a first part (50.2) upstream of the isolation means (34) and a second part (50.1) downstream of the isolation means (34),
d2) conducting steps a) to c), or 6b) and 6c), for the first part (50.1), and localizing the external leakage
i. downstream of the isolation means (34) in case that the external leakage is no longer detected,
ii. upstream of the isolation means (34) in case that the external leakage is still detected, and
iii. such that a first external leakage is upstream and a second external leakage is downstream of the isolation means (34) in case that the external leakage is detected to a reduced scale.

9. Method according to claim 8, wherein the second part (50.1) is kept isolated in case of i. or iii. in order to prevent system loss caused by external leakage.

10. Method according to any of the claims 7 to 9, wherein a further isolation means (36.2, 34) is used to further refine the localisation.

11. Control and monitoring unit (22) for a hydraulic system (12) of an aircraft (10), configured to control and monitor the hydraulic system (12) to execute the steps of the method according to any of the preceding claims.

12. Hydraulic system (12) for an aircraft (10), comprising a pump (14), a hydraulic reservoir (16), a hydraulic conduct system (18), a hydraulically driven unit (20), at least one sensor (26, 28, 30) for a parameter of the hydraulic system (12) indicating an external leakage and a control and monitoring unit (22), wherein the control and monitoring unit (22) is configured to control the hydraulic system (12) to execute the steps of the method according to any of the claims 1 to 10.

13. Hydraulic system (12) according to claim 12, wherein the control and monitoring unit (22) further is configured to monitor the at least one parameter during flight in order to determine an external leakage of the hydraulic system (12).

14. Aircraft (10) comprising a hydraulic system (12) according to claim 12 or 13 and/or a control and monitoring unit (22) according to claim 11.

15. Computer program comprising instructions to cause the hydraulic system (12) of claim 12 or 13 to execute the steps of the method according to any of the claims 1 to 10.
